(19) Europäisches Patentamt
European Patent Office
Office européen des brevets

(11) **EP 3 936 406 B1**

(12) **EUROPEAN PATENT SPECIFICATION**

(45) Date of publication and mention of the grant of the patent:
**05.06.2024 Bulletin 2024/23**

(21) Application number: **20827095.9**

(22) Date of filing: **18.05.2020**

(51) International Patent Classification (IPC):
**B61F 7/00** *(2006.01)*      **B60B 35/10** *(2006.01)*
**B61F 15/26** *(2006.01)*

(52) Cooperative Patent Classification (CPC):
**B61F 7/00; B60B 17/00; B60B 35/1045; B60B 35/1081; B61F 15/26;** B60Y 2200/30

(86) International application number:
**PCT/CN2020/090816**

(87) International publication number:
**WO 2020/253439 (24.12.2020 Gazette 2020/52)**

(54) **SLEEVE AND LOCKING MECHANISM FOR CHANGEABLE-GAUGE WHEEL SET**

HÜLSE UND VERRIEGELUNGSMECHANISMUS FÜR EIN RADSATZ MIT VERÄNDERLICHER SPURWEITE

MANCHON ET MÉCANISME DE VERROUILLAGE POUR ENSEMBLE DE ROUES DE CALIBRE VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2019 CN 201910541167**

(43) Date of publication of application:
**12.01.2022 Bulletin 2022/02**

(73) Proprietors:
• **CRRC Qingdao Sifang Co., Ltd.**
  **Qingdao, Shandong 266111 (CN)**
• **Southwest Jiaotong University**
  **Chengdu**
  **Sichuan 610031 (CN)**

(72) Inventors:
• **WANG, Yutao**
  **Sichuan 610031 (CN)**
• **HUANG, Yunhua**
  **Sichuan 610031 (CN)**

• **CAO, Hongyong**
  **Qingdao, Shandong 266111 (CN)**
• **WANG, Xu**
  **Qingdao, Shandong 266111 (CN)**
• **LI, Zhongyuan**
  **Qingdao, Shandong 266111 (CN)**

(74) Representative: **Micheli & Cie SA**
  **Rue de Genève 122**
  **Case Postale 61**
  **1226 Genève-Thônex (CH)**

(56) References cited:
| | |
|---|---|
| CN-A- 103 192 843 | CN-A- 106 740 964 |
| CN-A- 107 187 461 | CN-A- 108 791 352 |
| CN-A- 108 909 355 | CN-A- 109 455 040 |
| CN-A- 110 228 492 | CN-A- 110 228 493 |
| CN-A- 110 228 494 | CN-A- 110 228 495 |
| CN-A- 110 228 496 | CN-A- 110 228 497 |
| CN-A- 110 228 498 | CN-A- 110 228 499 |
| CN-U- 206 727 777 | CN-U- 207 469 936 |
| JP-A- H06 206 541 | |

Description

CROSS-REFERENCE TO RELATED APPLICATION

The present application claims priority to Chinese Application No. 2019105411671 filed on June 21, 2019, entitled "Sleeve and Locking Mechanism for Gauge-changing wheelset".

FIELD OF TECHNOLOGY

The present application relates to the technical field of rail vehicle for variable gauge, and in particular to a sleeve and a locking mechanism for a gauge-changing wheelset.

BACKGROUND

In order to meet the transportation requirements between tracks with different gauges in neighboring countries, generally, bogies with different wheelset inner pitch are replaced at a border between countries, but such solution is costly and time-consuming. Bogies for variable track gauge have been invented in Spain and then in Japan to enable continuous running of trains on tracks with different gauges.

However, traditional structures for variable track gauge, especially locking mechanisms are all passive have complex installation structures, which is in sliding fit with an axle, so as to be used in variable track gauge, and the operation for changing track gauge of the wheels need to be performed with an external auxiliary facility, which causes low efficiency and high investment cost.

CN108909355A discloses a wheel set used for a variable gauge bogie and the bogie, the wheel set comprising wheels, an axle and variable gauge mechanisms, wherein the variable gauge mechanisms comprise a fixing sleeve, a locking pin, a mitigation sleeve and an unlocking disc. The wheels are slidably disposed at two ends of the axle, and the variable gauge mechanisms are respectively disposed on the inner side axles of the wheels. The unlocking disc is pushed to drive the locking pin to move upwards, so that the fixing sleeve is unlocked from the mitigation sleeve.

BRIEF SUMMARY

(1) Technical problems to be solved

The present application is intended to address at least one of the technical problems existing in the prior art or related art.

The present application is intended to provide a sleeve and a locking mechanism of a gauge-changing wheelset, so as to solve the problems that the locking mechanisms in the traditional structure for variable gauge are all passive and have complicated installation structures.

(2) Technical solutions

In order to solve the above technical problems, an embodiment of the present application provides a sleeve of a gauge-changing wheelset, including a sleeve body, and the sleeve body includes:

a first sleeve including a first end cover and a first barrel, the first barrel extending toward an axial side of the first end cover in a circumferential direction of the first end cover, the first end cover being provided with an axial through hole;

a second sleeve being connected with the first sleeve, and the second sleeve including a second end cover integrally connected with the first barrel in a circumferential direction of the first barrel and a second barrel extending toward the same side as that the first barrel extending toward in a circumferential direction of the second end cover;

wherein the first end cover is arranged to be securely fixed around an axle of the gauge-changing wheelset, and located inside of wheels of the gauge-changing wheel set, and an inner hub of each of the wheels is configured to extend into the first barrel and be in sliding fit with the first barrel, and a side wall of the first barrel is provided with a through hole for being fit with a locking hole on the inner hub of each of the wheels;

a dust cover is fixed around an outer circumference of the second barrel;

the dust cover includes an annular cover body and retaining rings provided at both ends of the annular cover body in an axial direction, wherein at least one pair of electric brushes are provided at an inner wall of the annular cover body, chips corresponding to the electric brushes one by one are provided at an outer wall of the second barrel, a pair of annular mounting grooves surrounding the outer circumference of the second barrel are provided at intervals in an axial direction of the second barrel, and inner circumferences of the retaining rings are respectively mounted in the annular mounting groove and the sleeve body is rotated such that the chips rub is against the electric brushes to form an electrical connection.

In an embodiment, the outer wall of the second barrel is provided with insulating rubber, the chips are provided on the insulating rubber, and adjacent chips are separated by the insulating rubber.

In an embodiment, an outer surface of each of the chips is flush with an outer surface of the insulating rubber.

In an embodiment, an outer wall of the annular cover body is provided with a hanger for fixing the position of the annular cover body.

In an embodiment, the dust cover has a split structure, and includes a first cover body and a second cover body. The first cover body and the second cover body are butted to form the dust cover, and connecting blocks extending outward are provided at both ends of the first cover body and the second cover body, respectively, and provided with connecting holes; and the first cover body and the second cover body are connected by a connector.

In an embodiment, the electric brushes are two pairs of electric brushes, the chips are two pairs of chips, a pair of the electric brushes are provided on the first cover and another pair of the electric brushes are provided on the second cover and the two pairs of electric brushes are adjacent and staggered.

The embodiment of the present application also provides a locking mechanism of a gauge-changing wheelset, including a traction electromagnet and a locking pin, and the above-mentioned sleeve of a gauge-changing wheelset. The traction electromagnet is fixed at an inner side wall of the second end cover, the traction electromagnet includes a traction coil and a movable core being controlled to move by turning on and off of the traction coil, and the locking pin is fixedly connected to an end of the movable core away from the traction coil and the movable core is configured to drive the locking pins to penetrate through the through hole and insert into or remove from the locking hole to lock or unlock the wheels.

In an embodiment, the traction electromagnet further includes a housing being fixed on the inner side wall of the second end cover; and
the traction electromagnet further comprises chuck coils provided on opposite sides of the movable core, respectively, and a lock pin fitting with each of the chuck coils, two annular lock grooves are provided on the movable core at intervals in an axial direction of the movable core and the lock pin is configured to be inserted into one of the annular lock grooves to fix the movable core in an unlocked position or a locked position.

Beneficial effects

Compared with the prior art, the present application has the following advantages.

In the sleeve and the locking mechanism of a gauge-changing wheelset according to the present application, the locking mechanism is easy to mount and simple in structure by the arrangement of the sleeve. The locking mechanism includes traction electromagnets and locking pins, the movable iron is controlled based on turning on and off of the traction electromagnets and thus the locking pins are driven to extend or contract, thereby locking and unlocking the wheels. The wheels can be locked and unlocked directly without an external apparatus such that the ground apparatus for variable gauge becomes simpler. Moreover, signals for variable gauge are output by a vehicle control system which improves the reliability and efficiency of operations for changing tracks, and also saves the layout cost of external apparatuses.

**BRIEF DESCRIPTION OF THE DRAWINGS**

FIG. 1 is a three-dimensional schematic diagram of a gauge-changing wheelset according to an embodiment of the present application;

FIG. 2 is an axial cross-sectional schematic diagram showing a locking mechanism according to an embodiment of the present application;

FIG. 3 is a partial enlarged view of A in FIG.2;

FIG. 4 is an axial cross-sectional schematic diagram showing a lateral drive mechanism according to an embodiment of the present application;

FIG. 5 is a three-dimensional schematic diagram of a dust cover according to an embodiment of the present application;

FIG. 6 is a three-dimensional schematic diagram of a dust cover according to an embodiment of the present application viewed from another perspective;

FIG. 7 is a three-dimensional schematic diagram of a wheel of a gauge-changing wheelset according to an embodiment of the present application;

FIG. 8 is a schematic diagram of a traction electromagnet in a locking mechanism according to an embodiment of the present application;

Reference number: 1 lateral drive mechanism; 11 electric cylinder; 12 nut; 2 brake disc; 3: locking mechanism; 31 sleeve body; 311 first sleeve; 3111 first end cover; 3112 first barrel; 312 second sleeve; 3121 second end cover; 3122 second barrel; 32 traction electromagnet; 32-1 traction coil; 32-2 movable core; 33 locking pin; 34 chuck coil; 35 lock pin; 4: wheel; 41: locking hole; 5: axle; 6 dust cover; 61 electric brush; 62 chip; 63 insulating rubber; 64 hanger; 65 annular cover body; 66 retaining ring; 67 connecting block; 7 axle box body; 8 movable disc; 81 movable disc retaining ring; 9 four-point angular contact ball bearing; 91 bearing retaining ring.

## DETAILED DESCRIPTION

The specific embodiments of the present application are further described in detail below with reference to the drawings and embodiments. The following embodiments are intended to illustrate the application, but are not intended to limit the scope of the application.

In the description of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the present application and simplifying the description, rather than indicating or implying that the device or component stated must have a particular orientation, is constructed and operated in a particular orientation, and thus is not to be construed as limiting the application.

In the description of the present application, it is to be noted that unless explicitly stated and defined otherwise, the terms "installed/mounted", "connected with," and "connected" shall be understood broadly, for example, it may be either fixedly connected or detachably connected, or can be integrated; it may be mechanically connected, or electrically connected; it may be directly connected, or indirectly connected through an intermediate medium and the communication between the interior of two elements. The specific meanings of the terms above in the present application can be understood by a person skilled in the art in accordance with specific conditions.

Further, in the description of the present application, "multiple", "a plurality of", and "multiple groups" mean two or more unless otherwise specified.

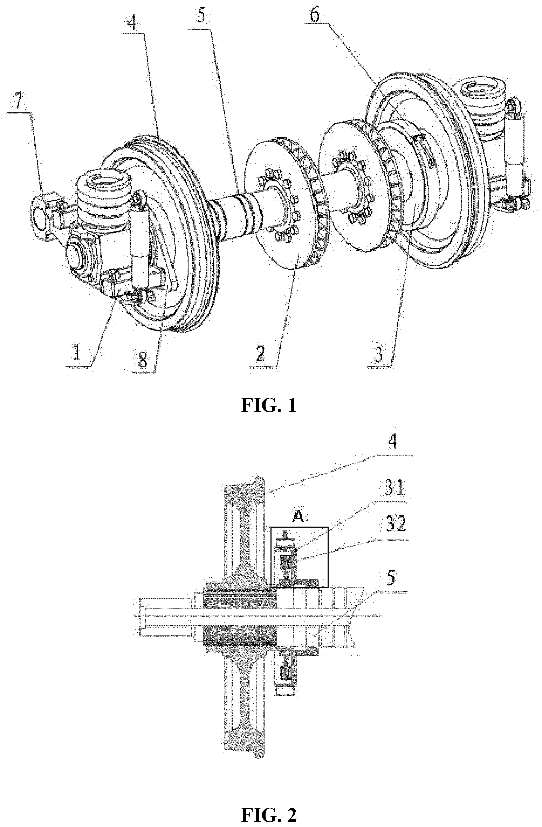

As shown in FIGS. 2 to 4, an embodiment of the present application provides a sleeve of a gauge-changing wheelset, including a sleeve body 31, and the sleeve body 31 includes:

a first sleeve 311 including a first end cover 3111 and a first barrel 3112, the first barrel 3112 extending toward an axial side of the first end cover 3111 in a circumferential direction of the first end cover 3111, the first end cover 3111 being provided with an axial through hole;

a second sleeve 312 being connected with the first sleeve 311, and the second sleeve 312 including a second end cover 3121 integrally connected with the first barrel 3112 in a circumferential direction of the first barrel 3112 and a second barrel 3122 extending toward the same side as that of the first barrel 3112 extending toward in a circumferential direction of the second end cover 3121;

wherein the first end cover is securely fixed around an axle of the gauge-changing wheelset by an axial through hole, and is located inside of wheels 4 of the gauge-changing wheelset. That is, the first end cover has an interference fit with an axle, and an inner hub of each of the wheels 4 is configured to extend into the first barrel and be in sliding fit with the first barrel, and a side wall of the first barrel is provided with a through hole for being fit with a locking hole 41 on the inner hub of each of the wheels and the number of the locking hole 41 is at least two. Specifically, in the present embodiment, the axis of the through hole is located on a plane where the axes of the at least two locking holes 41 are located. One locking hole 41 on the inner hubs of the wheel 4 is corresponding to the position of the through hole. When the wheels 4 move laterally, the inner hub of the wheels 4 moves relative to the first sleeve body until another locking hole 41 corresponds to the position of the through hole. Of course, it can be understood that, the "one locking hole 41" and the "another locking hole 41" correspond to the gauge.

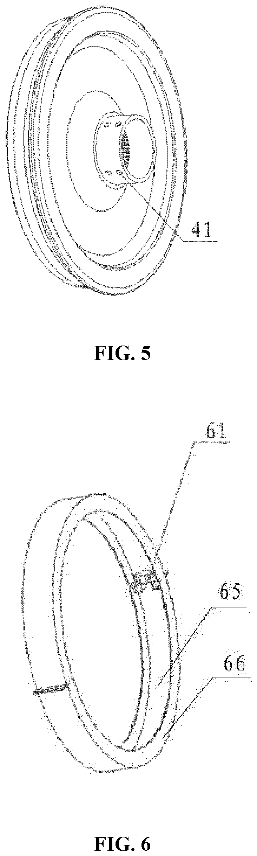

As shown in FIGS. 6-7, a a dust cover 6 is fixed around the outer circumference of the second barrel, and the dust cover 6 may prevent foreign matter from entering into the sleeve body 31.

The dust cover 6 includes an annular cover body 65 and retaining rings 66 provided at both ends of the annular cover body 65 in an axial direction, at least one pair of electric brushes 61 are provided at an inner wall of the annular cover body, chips 62 corresponding to the electric brushes 61 one by one are provided at an outer wall of the second barrel, a pair of annular mounting grooves surrounding the outer circumference of the second barrel are provided at intervals in an axial direction of the second barrel, and inner circumferences of the retaining rings 66 are respectively mounted in the annular mounting groove, the electric brushes 61 are in contact with the chips 62 and the sleeve body is rotated such that the chips 62 rub against the electric brushes 61 to form an electrical connection, thereby forming a power supply circuit.

In an embodiment, in order to prevent short circuits, the outer wall of the second barrel is provided with insulating rubber 63, the chips 62 are mounted on the insulating rubber 63, and adjacent chips 62 are separated by the insulating rubber 63 so as to avoid mutual interference between adjacent chips 62.

The insulating rubber 63 has a ring shape matching the outer circumference of the sleeve body 31, and the chips 62 are annular. In order to facilitate the mounting of the chips 62, the outer surface of the insulating rubber 63 is provided with a plurality of annular grooves arranged at intervals. The annular grooves are provided around the outer circumference of the insulating rubber 63, and the chips 62 are respectively mounted in the annular grooves, so that the adjacent chips 62 are separated by the insulating rubber 63, and a certain thickness of insulating rubber is provided between the sleeve body 31 and the chips 62 such that the loop current on the wheels and axles will not be transmitted to the chips 62.

In an embodiment, an outer surface of each of the chips 62 is flush with an outer surface of the insulating rubber 63, that is, only one side of each of the chips 62 that matches with the electric brushes 61 is left.

In an embodiment, an outer wall of the annular cover body 65 is provided with a hanger 64 for fixing the position of the annular cover body 65. The hanger 64 is used to be fitted with a boom connected to an end beam of the vehicle body to prevent the dust cover 6 from rotating with the sleeve body 31 under the friction force of the sleeve body 31.

In an embodiment, the dust cover 6 has a split structure, and includes a first cover body and a second cover body. The first cover body and the second cover body are butted to form the dust cover 6, and connecting blocks 67 extending outward are provided at both ends of the first cover body and the second cover body, respectively, and provided with connecting holes; and the first cover body and the second cover body are connected by a connector. During installation, the retaining ring of the first cover body is first clamped in the annular mounting groove of the sleeve body 31, and then the retaining ring of the second cover body is clamped in the annular mounting groove of the sleeve body 31. Bolts and other connectors are used to penetrate through connecting holes on the connecting block 67 of the first cover body and the second cover body so as to connect the first cover body and the second cover body to form an integral dust cover 6, and the dust cover 6 is mounted on the outer circumference of the sleeve body 31.

In an embodiment, the electric brushes 61 are two pairs of the electric brushes, the chips 62 are two pairs of chips, a pair of the electric brushes 61 are provided on the first cover and another pair of the electric brushes 62 are provided on the second cover and the two pairs of the electric brushes 61 are adjacent and staggered and a pair of electric brushes 61 corresponds to a pair of chips 62 respectively.

As shown in FIGS. 2 to 3, an embodiment of the present application further provides a locking mechanism 3 for a gauge-changing wheelset, including a traction electromagnet 32 and a locking pin 33, and the above sleeve of a gauge-changing wheelset. The traction electromagnet 32 is fixed at an inner side wall of the second end cover, the traction electromagnet 32 includes a traction coil 32-1 and a movable core 32-2 being controlled to move by turning on and off the traction coil 32-1, the traction coil 32-1 has a fixed position, and the movable core 32-2 points to the position where one of the locking holes 41 is located, and each of the locking pins 33 is fixedly connected to an end of the movable core 32-2 away from the traction coil 32-1 and the movable core 32-2 drives the locking pins 33 to penetrate through the through hole and insert into or remove from the locking holes 41 to lock or unlock the wheels.

In an embodiment, the traction electromagnet 32 further includes a housing fixed on the inner side wall of the second end cover.

The traction electromagnet further includes chuck coils provided on opposite sides of the movable core 32-2, respectively, and a lock pin 35 fitting with each of the chuck coils. Two annular lock grooves are provided on the movable core at intervals in an axial direction of the movable core and the lock pin is configured to be inserted into one of the annular lock grooves to fix the movable core in an unlocked position or a locked position. That is, after the movable core 32-2 is inserted into the through hole and the locking holes 41, the lock pin 35 is inserted into the corresponding annular lock groove to fix the movable core 32-2 in a locking position, and thus the locking reliability can be improved. After the movable core 32-2 exits from the corresponding locking hole 41, the lock pin 35 is inserted into the corresponding annular lock groove to fix the movable core 32-2 in an unlocking position, which improves the unlocking reliability and avoids the mis-operation of the movable core 32-2.

The two pairs of electric brushes 61 are respectively connected to a power supply unit, and the power supply unit is connected to a control mechanism. The control mechanism is configured to control the power supply unit to supply power to the traction coil 32-1 and/or the chuck coil 34. The control mechanism may be a control mechanism for the train itself.

Further, the axis of the movable core 32-2 is coaxially arranged with the axes of the locking holes 41 and the movable core 32-2 may drive the locking pins 33 to extend into or out of the corresponding locking hole 41. Specifically, when the vehicle is running normally, the locking pin 33 is located in the locking hole 41 corresponding to a gauge, and locked to each other. When the gauge needs to be changed, the wheel 4 should be unlocked first. At this time, the traction coil 32-1 is energized, and the movable core 32-2 is moved closer to the traction coil 32-1 under the influence of the magnetic field force of the traction coil 32-1, and the movable core 32-2 is retracted and thus exits from the locking hole 41 to be unlocked.

In the present embodiment, the wheels 4 are locked and unlocked directly by the traction electromagnet 32 without a structure for assisting locking and unlocking on a ground apparatus for variable gauge, and thus the structure of the ground apparatus for variable gauge is simplified and becomes relatively simple and more reliable and the cost is saved.

The traction coil 32-1 is arranged in the housing; one end of the movable core 32-2 passes through the traction coil 32-1, the other end of the movable core 32-2 is fixedly connected to the locking pins 33, and the locking pins 33 may be fixedly connected to the end of the movable core 32-2 away from the traction coil 32-1 by connecting parts such as bolts and screws; through the movable core 32-2, the locking pins 33 are driven to pass through the through hole and be located in the locking holes 41 corresponding to the gauge such that the wheels 4 are locked, and through the movable core 32-2, the locking pins 33 are driven to exit the locking holes 41 such that the wheels 4 are unlocked. The wheels are easily locked and unlocked and have high locking and unlocking reliability.

In an embodiment of the present application, as shown in FIG. 5, in order to improve reliability, the inner hub of the wheel 4 is provided with a plurality of rows of the locking holes 41 in the circumferential direction, and each row of the locking holes 41 includes a plurality of the locking holes 41 arranged at intervals in the axial direction, and a distance between two adjacent locking holes 41 is equal to a half of the gauge to be changed. When the gauge is changed, two wheels 4 move simultaneously, the two wheels 4 each move a half of the gauge to be changed, that is, the total moving distance is the gauge to be changed. For example, changing from a standard gauge to a narrow gauge or wide gauge; or changing from a narrow gauge or wide track gauge to a standard gauge, which may be selected according to specific needs.

Correspondingly, the traction electromagnets are multiple, a plurality of the traction electromagnets 32 are distributed along the inner side wall of the second end cover in a circumferential direction, and the plurality of the traction electromagnets 32 correspond to a plurality of rows of the locking holes 41 one by one, that is, each traction electromagnet 32 corresponds to a row of locking holes 41.

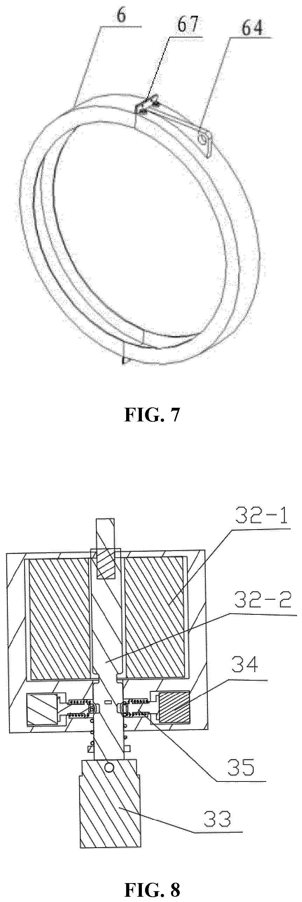

In an embodiment of the present application, as shown in FIG. 8, the lock pin 35 is T-shaped, and a cavity for accommodating the large end of the lock pin 35 is provided at a position where the chuck coil 34 is provided with the lock pin 35 and the cavity is provided with a gap for the lock pin 35 to move in the axial direction and the size of the gap may be 3-4mm, preferably 3 mm. An end of the lock pin 35 outside the cavity is provided with an annular boss, the lock pin 35 is connected with a first spring having one end abutting against the annular boss and other end abutting against the outer side of the cavity. When the chuck coil 34 is energized, the lock pin 35 is attracted by a magnetic force of the chuck coil 34 to overcome elastic force of the first spring, and moves in the direction away from the movable core 32-2 until it exits from the movable core 32-2. At this time, the movable core 32-2 may perform an unlocking or locking operation. When the unlocking or locking operation is completed, the chuck coil 34 is de-energized, the lock pin 35 is re-inserted into the corresponding annular lock groove under the restoring force of the first spring, and the movable core 32-2 is positioned in the unlocked or locked state.

A second spring is connected with one end of the movable core 32-2 outside the housing, one end of the second spring abuts against the outside of the housing, and the other end of the second spring abuts against an annular flange at the end of the movable core 32-2.

The second spring facilitates the movable core 32-2 to be quickly reset after the traction coil 32-1 is de-energized. During changing the gauge, the traction electromagnet 32 is operated as follows: first, the chuck coil 34 is energized, and the lock pin 35 is attracted to overcome the spring force such that the lock pin 35 extends exit from the annular lock groove of the movable core 32-2. The lock pin 35 extends into the annular groove of the movable core 32-2 by 3mm, that is, the attraction surface of the lock pin 35 is 3mm away from the chuck, and a miniature chuck may be used since the magnetic force in the air gap of 3mm is relatively large. Then, the traction coil 32-1 is energized, and the movable core 32-2 drives the locking pin 33 to move toward outside of the locking hole 41, and then the wheel 4 is unlocked. Furthermore, before the wheel 4 moves laterally, the chuck coil 34 is powered off first, and the lock pin 35 is clipped in the annular lock groove at the lower end of the movable core 32-2 to keep the movable core 32-2 in the unlocked position of the wheel 4, and then the traction coil 32-1 is de-energized, which may prevent the coil from being burned due to being energized for a long time. Finally, when changing gauge is completed, the chuck coil 34 is energized, the movable core 32-2 is unlocked, moves downward under a restoring force of the second spring, and drives the locking pin 33 to move down to the locking hole 41 on the hub of wheel 4, the wheel 4 is locked again. The chuck coil 34 is de-energized, and the movable core 32-2 is clipped by the locking pin 35 to prevent that the locking pin 35 drives the locking pin 33 and the wheel 4 to move radially under the centrifugal force and thus the wheel 4 is unlocked.

Since the operating voltage of the AC electromagnet is generally AC 220V, the temperature rises during operation, when the movable core 32-2 is clipped, the electromagnet is easily burned out due to excessive current and thus has a short service life. DC electromagnet generally adopts 24V DC voltage, and generally will not be burnt out since the movable core 32-2 is clipped. They are small in size and have a long service life and smaller start-up power than AC electromagnets. Because the required starting power is not large here, DC power supply is adopted.

As shown in FIG. 1, in an embodiment of the present application, a gauge-changing wheelset is provided with the locking mechanism 3, including wheels 4 and an axle 5. The wheels 4 are provided at both ends of the axle 5 and connected to the axle 5 through splines. Specifically, the inner circumference of each of the wheels 4 is provided with an inner spline, the axle 5 is provided with an outer spline, and the wheels 4 and the axle 5 are in fit connection through the inner spline and the outer spline to evenly distribute torques on the inner circumferences of the wheels 4 which not only convenient to transmit torque, but also convenient for the wheels 4 to slide along the axle 5 to change the gauge. Both ends of the axle 5 located outside the wheels 4 are respectively supported in an axle box body 7 providing support for the wheelset. In the present embodiment, the hub of each of the wheels 4 extends outside of the wheels 4 and inside of the wheels 4, and thus an outer hub and an inner hub are formed to facilitate the installation of components matched therewith.

As shown in FIGS. 2-4 in conjunction with FIG. 1, in the present embodiment, in order to facilitate the change in the gauges, the gauge-changing wheelset includes a locking mechanism 3 provided on the inner side of each of the wheels 4, respectively and a lateral drive mechanism 1 provided on the outer side of each of the wheels 4, respectively.

Further, the lateral drive mechanism 1 is fixed on the axle box body 7. The lateral drive mechanism 1 includes an electric cylinder 11, and the protruding end of the electric cylinder 11 is used to push or pull the unlocked wheels 4 to change the gauge of the wheel 4. After the gauge is changed, the traction coil 32-1 is de-energized, the magnetic field force of the traction coil 32-1 on the movable core 32-2 disappears, and the movable core 32-2 moves in a direction away from the traction coil 32-1 under the external force. That is, it moves toward the direction closer to the locking hole 41, and is inserted into the locking holes 41 to be locked again.

Wheels 4 are pushed or pulled by the electric cylinder 11 of the lateral drive mechanism 1 to provide the lateral movement of the wheels 4, so that the lateral movement of the wheels 4 is more stable, the wear between the wheels and the axles may be reduced, and the reliability of the locking mechanism of the gauge-changing wheelset is improved.

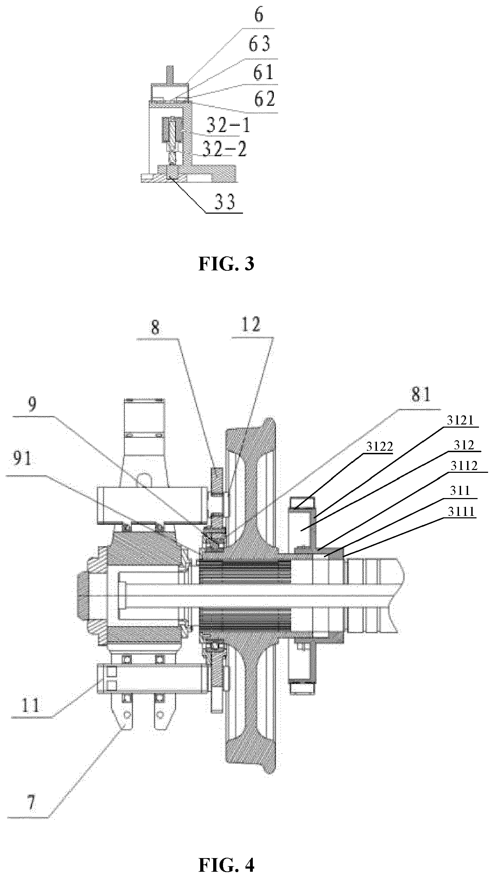

In an embodiment of the present application, as shown in FIG. 4, in order to facilitate the connection between electric cylinders 11 and the wheels 4, the lateral drive mechanism 1 further includes a movable disc 8 including a disc body provided with a central through hole and a bearing fixedly mounted in the central through hole, preferably a four-point angular contact ball bearing 9. An inner ring of the bearing is fixed around the outer hub of each of the wheels 4 to ensure that the disc body remains relatively stationary when the axle 5 is rotated. The disc body is provided with connecting holes 82 connected with the extension end of the electric cylinder 11, and the extension end of the electric cylinder 11 is fixedly connected to the connecting holes, so that the extension end of the electric cylinder 11 may drive the wheels 4 to move synchronously when it moves.

It should be noted that, since the bearing here needs to withstand large bidirectional axial force, but basically does not withstand radial force, the four-point angular contact ball bearing 9 is preferably used.

In order to reach the train speed of 400km/h, the limiting speed of the four-point angular contact ball bearing 9 should not be less than $\dfrac{4\times10^{8}}{60\Pi D}$ (r/min), where D is the diameter of each of the wheels 4 (unit: mm). A (axial) width of the four-point angular contact ball bearing 9 should be kept at about 45mm, and a (radial) thickness thereof should be as small as possible under the premise of meeting the conditions. The four-point angular contact ball bearing 9 does not have an axial internal clearance. In addition, the four-point angular contact ball bearing 9 mainly bears two-way axial forces, so two-way retaining rings should be provided at the inner and outer sides. Accordingly, the movable disc retaining ring 81 is provided at an outer ring of the bearing corresponding to the movable disc 8.

In an embodiment of the present application, in order to ensure the force balance of the wheels 4, each of the lateral drive mechanisms 1 includes two electric cylinders 11 fixed in parallel on the axle box body 7 and separately provided on both sides of the hubs of the wheels 4, the opposite ends of the disc body are respectively provided with the connecting holes, the extension end of each of the electric cylinders 11 penetrates through the connecting holes 82, and is fixedly connected with the connecting holes through fasteners. Two connecting holes are arranged symmetrically with respect to the center through hole of the disc body to ensure that the forces applied on the wheels 4 at both sides are equal and the forces on the wheels are balanced.

In an embodiment of the present application, the electric cylinder 11 is a planetary roller screw pair electric cylinder having characteristics of a large cross-sectional area of rolling element for bearing force, simultaneous being loaded at any time and no cyclic alternating stress. Due to space constraints, an integrated planetary roller screw electric cylinder is adopted here. A screw extension end of the planetary roller screw electric cylinder is provided with a positioning boss and an external thread. In order to prevent vibration from affecting the planetary roller screw electric cylinder, each of the connecting holes is provided with a rubber node, but the rubber node cannot protrude outside of the connecting holes, to prevent from affecting the accuracy of the electric cylinder 11 in the lateral direction. The screw extension end penetrates through the rubber nodes and the positioning boss abuts against one end surface of each of the connecting holes, and is screwed on the external thread using a nut 12 so that the nut 12 abuts against the other end surface of each of the connecting holes so that both are connected firmly to ensure that after the screw extension end is connected with each of the connecting holes, no relative displacement exists between the electric cylinder 11 and the movable disc 8 and thus the wheels 4 move accurately.

When the gauge changes from wide to narrow, the electric cylinder 11 pushes the movable disc 8 to move away from the axle box body 7, and the movable disc 8 drives the wheels 4 to move at the same time, thereby a wide gauge being changed into a narrow gauge.

When the gauge changes from narrow to wide, the electric cylinder 11 pulls the movable disc 8 to move towards the axle box body 7, and the movable disc 8 drives the wheels 4 to move at the same time, thereby changing into a wide gauge from a narrow gauge.

In an embodiment of the present application, as shown in FIG. 1, in order to reduce the weight, the movable disc is in a rhombus-like shape, and top corners of the rhombus-like shape are constructed as arcs that are transitionally connected to adjacent sides. A pair of the connecting holes are respectively provided in a pair of opposite top corners on the movable disk. Since no connecting holes are provided in the other pair of top corners, the other pair of top corners may be configured as arc surfaces matching the outer circumference of the central through hole of the movable disc so as to further reduce the weight of the movable disc 8 and save materials and installation space of the movable disc 8.

In order to avoid scratches of the axle 5 when the wheels 4 move, and the force required for the movement of the wheels 4, that is, the output power of the drive mechanism is decreased, the wheels 4 is unloaded here by supporting a support rail at the axle box. Therefore, a set of support rails needs be mounted on both sides of the ground rail.

In the track section in which the gauge is changed, the support rail appears first, and a steel rail for a narrow-track-gauge and the support rail coexist for a section; then, the steel rail disappears, and only the support rail is used for supporting, and the change of the gauge is completed in this section. Next, a steel rail for a wide-track-gauge and the support rail coexist for a section. Finally, the support rail gradually descends, disappears, and enters a wide-track-gauge rail line.

The height from a support surface of the support rail to a horizontal plane is the same as the height from the bottom of the axle box to the horizontal plane, two ends have small heights such that the loading/unloading process proceeds slowly and the occurrence of impact is avoided. Side stoppers are provided outside to prevent the train from moving laterally and slipping out of the support surface.

The gauge change process has five steps, i.e., unloading, unlocking, laterally moving, locking, and loading of the wheels 4. Here, the gauge changing from a standard gauge of 1435mm to wide gauge of 1520mm is taken as an example to illustrate the gauge change process of the active gauge change solution.

In the first step, the wheels 4 are unloaded: when the train runs from the gauge of 1435mm to a gauge changing section, the speed is decreased to 15m/s, and then as the train advances, the support track gradually rises, and the support track is in contact with the axle box body 7 and runs for a short distance, the standard steel track disappears, and the wheels 4 is completely unloaded.

In the second step, the wheel 4 is unlocked: an apparatus installed in the ground support rail sends a signal indicating the wheels 4 are unloaded. The control mechanism supplies power to the locking mechanism 3, and in the traction electromagnet 32, the chuck coil 34 and the traction coil 32-1 are energized in sequence, the movable core 32-2 is unlocked and drives locking pin 33 to be retracted, and the wheels 4 are unlocked. When the traction electromagnet 32 detects that the movable core 32-2 is in the retracted position, a signal indicating the wheels 4 are unlocked is sent out, and the control mechanism de-energizes the chuck coil 34 and the traction coil 32-1 in turn to prevent the coil from being burnt when it is energized for a long time. At this time, the movable core 32-2 is clipped in the unlocked position of the wheel 4 by the lock pin 35.

In the third step, the gauge is changed: after the control mechanism receives the signal indicating the wheels 4 are unlocked, it de-energizes the chuck coil 34 and the traction coil 32-1 in turn, and energizes the planetary roller screw electric cylinder (having an energizing direction opposite to a previous energizing direction, that is, the reverse direction is energized last time, and the forward direction is energized this time). The electric cylinder 11 pushes/pulls the movable disc 8 to make the wheels 4 reach a new gauge position.

In the fourth step, the wheels 4 are locked: after the electric cylinder 11 reaches the gauge position, a signal indicating the gauge change is completed is sent out, and then the chuck coil 34 of the traction electromagnet 32 is energized, and the movable core 32-2 is unlocked and the locking pin 33 is driven by the spring restoring force to extend out. When a detection device detects that the movable core 32-2 is in the extended-out position, a signal indicating the wheels 4 are locked is sent out, the chuck coil 34 is de-energized, and the lock pin 35 locks the movable core 32-2 and the locking pin 33 at a locked position of the wheels 4 to prevent it from moving under the centrifugal force.

In the fifth step, wheels 4 are loaded: the steel rail for the gauge of 1520mm appears, the support track gradually drops, and the wheels 4 are reloaded; the entire gauge change process is finished.

From the embodiments mentioned above, the active structure for variable gauge is provided, and the movable core is controlled to be extended or retracted based on the turning on or turning off of the traction electromagnet and thus the wheels are locked or unlocked directly without the external apparatus such that the ground apparatus for variable gauge becomes simpler and has reduced cost. Moreover, signals for variable gauge are output by a vehicle control system which improves the reliability and efficiency of actions for variable gauge.

The embodiments above are only the preferred embodiments of the present application, and are not intended to limit the application. The scope of protection is defined by the appended claims.

**Claims**

1. A sleeve for a gauge-changing wheelset, comprising a sleeve body (31), the sleeve body (31) comprising:

   a first sleeve (311) including a first end cover (3111) and a first barrel (3112), the first barrel (3112) extending toward an axial side of the first end cover (3111) in a circumferential direction of the first end cover (3111), the first end cover (3111) having an axial through hole;
   a second sleeve (312) connected with the first sleeve (311), the second sleeve (312) including a second end cover (3121) integrally connected with the first barrel (3112) in a circumferential direction of the first barrel (3112) and a second barrel (3122) extending toward the same side as that of the first barrel (3112) extending toward in a circumferential direction of the second end cover (3121);
   wherein the first end cover (3111) is arranged to be securely fixed around an axle (5) of the gauge-changing wheelset, and located inside of wheels (4) of the gauge-changing wheelset, and an inner hub of each of the wheels (4) is configured to extend into the first barrel (3112) and be in sliding fit with the first barrel (3112), and a side wall of the first barrel (3112) has a through hole for being fit with a locking hole (41) on the inner hub of each of the wheels (4);
   a dust cover (6) is connected with an outer circumference of the second barrel (3122);
   the dust cover (6) comprises an annular cover body (65) and retaining rings (66) disposed at both ends of the annular cover body (65) in an axial direction, at least one pair of electric brushes (61) being disposed at an inner wall of the annular cover body (65); wherein chips (62) corresponding to the electric brushes (61) one by one are provided at an outer wall of the second barrel, a pair of annular mounting grooves surrounding the outer circumference of the second barrel (3122) are provided at intervals in an axial direction of the second barrel (3122), and inner circumferences of the retaining rings (66) are respectively mounted in the annular mounting grooves and the sleeve body (31) is rotated such that the chips (62) rub against the electric brushes (61) to form an electrical connection.

2. The sleeve of claim 1, **characterized in that** the outer wall of the second barrel (3122) is provided with insulating rubber (63), the chips (62) are mounted on the insulating rubber (63), and adjacent chips (62) are separated by the insulating rubber (63).

3. The sleeve of claim 2, **characterized in that** an outer surface of each of the chips (62) is flush with an outer surface of the insulating rubber (63).

4. The sleeve of claim 1, **characterized in that** an outer wall of the annular cover body (65) is provided with a hanger (64) for fixing the position of the annular cover body (65).

5. The sleeve of claim 1, **characterized in that** the dust cover (6) has a split structure, and comprises a first cover body and a second cover body, the first cover body and the second cover body are butted to form the dust cover (6), and connecting blocks (67) extending outward are provided at both ends of the first cover body and the second cover body, respectively, and the connecting blocks (67) have connecting holes; and the first cover body and the second cover body are connected by a connector.

6. The sleeve of claim 5, **characterized in that** the electric brushes (61) comprise two pairs of electric brushes (61), the chips (62) comprise two pairs of chips, a pair of the electric brushes (61) are disposed on the first cover and another pair of the electric brushes (61) are disposed on the second cover and the two pairs of electric brushes (61) are adjacent and staggered.

7. A locking mechanism (3) for a gauge-changing wheelset, comprising a traction electromagnet (32) and a locking pin (33), and the sleeve for the gauge-changing wheelset of any one of claims 1 to 6, wherein the traction electromagnet (32) is fixed at an inner side wall of the second end cover (3121), the traction electromagnet (32) includes a traction coil (32-1) and a movable core (32-2) being controlled to move by turning on and off the traction coil (32-1), and the locking pin (33) is fixedly connected to an end of the movable core (32-2) away from the traction coil (32-1) and the movable core (32-2) is configured to drive the locking pins (33) to penetrate through the through hole and insert into or remove from the locking hole (41) to lock or unlock the wheels (4).

8. The locking mechanism (3) of claim 7, **characterized in that** the traction electromagnet (32) further comprises a housing fixed on the inner side wall of the second end cover (3121); and
   the traction electromagnet (32) further comprises chuck coils (34) disposed on opposite sides of the movable core (32-2), respectively, and a lock pin (35) fitting with each of the chuck coils (34), wherein two annular lock grooves are disposed on the movable core (32-2) at intervals in an axial direction of the movable core (32-2) and the lock pin (35) is configured to insert into one of the annular lock grooves to fix the movable core (32-2) in an unlocked position or a locked position.

**Patentansprüche**

1. Hülse für einen Radsatz mit veränderlicher Spurweite, umfassend einen Hülsenkörper (31), wobei der Hülsenkörper (31) umfasst:

    eine erste Hülse (311), die eine erste Endabdeckung (3111) und einen ersten Zylinder (3112) umfasst, wobei sich der erste Zylinder (3112) in Richtung auf eine axiale Seite der ersten Endabdeckung (3111) in einer Umfangsrichtung der ersten Endabdeckung (3111) erstreckt, wobei die erste Endabdeckung (3111) ein axiales Durchgangsloch aufweist;
    eine zweite Hülse (312), die mit der ersten Hülse (311) verbunden ist, wobei die zweite Hülse (312) eine zweite Endabdeckung (3121), die mit dem ersten Zylinder (3112) in einer Umfangsrichtung des ersten Zylinders (3112) einstückig verbunden ist, und einen zweiten Zylinder (3122), der sich in Richtung auf die gleiche Seite wie die des ersten Zylinders (3112) erstreckt, der sich in einer Umfangsrichtung der zweiten Endabdeckung (3121) erstreckt, umfasst;
    wobei die erste Endabdeckung (3111) dazu eingerichtet ist, um eine Achse (5) des Radsatzes mit veränderlicher Spurweite sicher befestigt zu sein, und sich innerhalb der Räder (4) des Radsatzes mit veränderlicher Spurweite befindet, und eine innere Nabe jedes der Räder (4) dazu konfiguriert ist, sich in den ersten Zylinder (3112) hinein zu erstrecken und sich in Gleitpassung mit dem ersten Zylinder (3112) zu befinden, und eine Seitenwand des ersten Zylinders (3112) ein Durchgangsloch zum Einpassen mit einem Verriegelungsloch (41) auf der inneren Nabe jedes der Räder (4) aufweist;
    eine Staubabdeckung (6) mit einem Außenumfang des zweiten Zylinders (3122) verbunden ist;
    die Staubabdeckung (6) einen ringförmigen Abdeckkörper (65) und Halteringe (66), die an beiden Enden des ringförmigen Abdeckkörpers (65) in einer axialen Richtung angeordnet sind, umfasst, wobei mindestens ein Paar von elektrischen Bürsten (61) an einer Innenwand des ringförmigen Abdeckkörpers (65) angeordnet ist; wobei Plättchen (62), die eins zu eins den elektrischen Bürsten (61) entsprechen, auf einer Außenwand des zweiten Zylinders bereitgestellt werden, wobei ein Paar von ringförmigen Montagenuten, die den Außenumfang des zweiten Zylinders (3122) umgeben, in Intervallen in einer axialen Richtung des zweiten Zylinders (3122) bereitgestellt wird, und der innere Umfang der Halteringe (66) jeweils in den ringförmigen Montagenuten montiert ist, und der Hülsenkörper (31) derart gedreht wird, dass die Plättchen (62) an den elektrischen Bürsten (61) schleifen, um eine elektrische Verbindung herzustellen.

2. Hülse nach Anspruch 1, **dadurch gekennzeichnet, dass** die Außenwand des zweiten Zylinders (3122) mit isolierendem Gummi (63) versehen ist, die Plättchen (62) auf dem isolierenden Gummi (63) montiert sind, und angrenzende Plättchen (62) durch das isolierende Gummi (63) getrennt sind.

3. Hülse nach Anspruch 2, **dadurch gekennzeichnet, dass** eine äußere Oberfläche jedes der Plättchen (62) mit einer äußeren Oberfläche des isolierenden Gummis (63) fluchtet.

4. Hülse nach Anspruch 1, **dadurch gekennzeichnet, dass** eine Außenwand des ringförmigen Abdeckkörpers (65) mit einer Hängerklemme (64) versehen ist, um die Position des ringförmigen Abdeckkörpers (65) zu fixieren.

5. Hülse nach Anspruch 1, **dadurch gekennzeichnet, dass** die Staubabdeckung (6) eine gespaltete Struktur aufweist und einen ersten Abdeckkörper und einen zweiten Abdeckkörper umfasst, wobei der erste Abdeckkörper und der zweite Abdeckkörper aneinanderstoßen, um die Staubabdeckung (6) zu bilden, und wobei sich Verbindungsblöcke (67), die sich nach außen erstrecken, an beiden Enden jeweils des ersten Abdeckkörpers und des zweiten Abdeckkörpers bereitgestellt werden, und die Verbindungsblöcke (67) Verbindungslöcher aufweisen; und wobei der erste Abdeckkörper und der zweite Abdeckkörper durch ein Verbindungsteil verbunden sind.

6. Hülse nach Anspruch 5, **dadurch gekennzeichnet, dass** die elektrischen Bürsten (61) zwei Paare von elektrischen Bürsten (61) umfassen, die Plättchen (62) zwei Paare von Plättchen umfassen, ein Paar der elektrischen Bürsten (61) auf der ersten Abdeckung angeordnet ist und ein anderes Paar der elektrischen Bürsten (61) auf der zweiten Abdeckung angeordnet ist, und die beiden Paare von elektrischen Bürsten (61) angrenzend und gestaffelt sind.

7. Verriegelungsmechanismus (3) für einen Radsatz mit veränderlicher Spurweite, umfassend einen Zug-Elektromagneten (32) und einen Verriegelungsstift (33) und die Hülse für den Radsatz mit veränderlicher Spurweite nach einem der Ansprüche 1 bis 6, wobei der Zug-Elektromagnet (32) an einer inneren Seitenwand der zweiten Endabdeckung (3121) befestigt ist, der Zug-Elektromagnet (32) eine Zug-Spule (32-1) und einen bewegbaren Kern (32-2), der gesteuert wird, um sich zu bewegen, indem die Zug-Spule (32-1) ein- und ausgeschaltet wird, umfasst, und der Verriegelungsstift (33) fest mit einem Ende des bewegbaren Kerns (32-2) von der Zug-Spule (32-1) entfernt verbunden ist, und der bewegbare Kern (32-2) dazu konfiguriert ist, die Verriegelungsstifte (33) anzutreiben, damit sie durch das Durchgangsloch eindringen und in das Verriegelungsloch (41) eingefügt oder daraus entnommen werden, um die Räder (4) zu verriegeln oder zu entriegeln.

**8.** Verriegelungsmechanismus (3) nach Anspruch 7, **dadurch gekennzeichnet, dass** der Zug-Elektromagnet (32) ferner ein Gehäuse umfasst, das an der inneren Seitenwand der zweiten Endabdeckung (3121) befestigt ist; und
der Zug-Elektromagnet (32) ferner Spannspulen (34), die jeweils auf gegenüberliegenden Seiten des bewegbaren Kerns (32-2) angeordnet sind, und einen Verriegelungsstift (35), der zu jeder der Spannspulen (34) passt, umfasst, wobei zwei ringförmige Verriegelungsnuten auf dem bewegbaren Kern (32-2) in Intervallen in einer axialen Richtung des bewegbaren Kerns (32-2) angeordnet sind, und der Verriegelungsstift (35) dazu konfiguriert ist, in eine der ringförmigen Verriegelungsnuten eingefügt zu werden, um den bewegbaren Kern (32-2) in einer entriegelten Position oder in einer verriegelten Position zu fixieren.

## Revendications

**1.** Manchon pour ensemble de roues à écartement variable, comprenant un corps de manchon (31), le corps de manchon (31) comprenant :

un premier manchon (311) incluant un premier couvercle d'extrémité (3111) et un premier corps cylindrique (3112), le premier corps cylindrique (3112) s'étendant vers un côté axial du premier couvercle d'extrémité (3111) dans une direction circonférentielle du premier couvercle d'extrémité (3111), le premier couvercle d'extrémité (3111) présentant un trou traversant axial ;
un second manchon (312) connecté au premier manchon (311), le second manchon (312) incluant un second couvercle d'extrémité (3121) connecté d'un seul tenant au premier corps cylindrique (3112) dans une direction circonférentielle du premier corps cylindrique (3112) et un second corps cylindrique (3122) s'étendant vers le même côté que celui du premier corps cylindrique (3112) s'étendant dans une direction circonférentielle du second couvercle d'extrémité (3121) ;
dans lequel le premier couvercle d'extrémité (3111) est agencé pour être fixé de manière sûre autour d'un essieu (5) de l'ensemble de roues à écartement variable, et situé à l'intérieur des roues (4) de l'ensemble de roues à écartement variable, et un moyeu intérieur de chacune des roues (4) est configuré pour s'étendre dans le premier corps cylindrique (3112) et être en ajustement coulissant avec le premier corps cylindrique (3112), et une paroi latérale du premier corps cylindrique (3112) présente un trou traversant pour un ajustement avec un trou de verrouillage (41) sur le moyeu intérieur de chacune des roues (4) ;
un couvercle anti-poussière (6) est connecté à une circonférence extérieure du second corps cylindrique (3122) ;
le couvercle anti-poussière (6) comprend un corps de couvercle annulaire (65) et des bagues de retenue (66) disposées aux deux extrémités du corps de couvercle annulaire (65) dans une direction axiale, au moins une paire de balais électriques (61) étant disposés au niveau d'une paroi intérieure du corps de couvercle annulaire (65) ; dans lequel des plaquettes (62) correspondant aux balais électriques (61) une à une sont prévues au niveau d'une paroi extérieure du second corps cylindrique, une paire de rainures de montage annulaires entourant la circonférence extérieure du second corps cylindrique (3122) sont prévues à intervalles dans une direction axiale du second corps cylindrique (3122), et des circonférences intérieures des bagues de retenue (66) sont respectivement montées dans les rainures de montage annulaires et le corps de manchon (31) est mis en rotation de telle sorte que les plaquettes (62) frottent contre les balais électriques (61) pour former une connexion électrique.

**2.** Manchon selon la revendication 1, **caractérisé en ce que** la paroi extérieure du second corps cylindrique (3122) est pourvue de caoutchouc isolant (63), les plaquettes (62) sont montées sur le caoutchouc isolant (63), et les plaquettes adjacentes (62) sont séparées par le caoutchouc isolant (63).

**3.** Manchon selon la revendication 2, **caractérisé en ce qu'**une surface extérieure de chacune des plaquette (62) affleure une surface extérieure du caoutchouc isolant (63).

**4.** Manchon selon la revendication 1, **caractérisé en ce qu'**une paroi extérieure du corps de couvercle annulaire (65) est pourvue d'un dispositif de suspension (64) pour fixer la position du corps de couvercle annulaire (65).

**5.** Manchon selon la revendication 1, **caractérisé en ce que** le couvercle anti-poussière (6) présente une structure fendue, et comprend un premier corps de couvercle et un second corps de couvercle, le premier corps de couvercle et le second corps de couvercle sont mis en butée pour former le couvercle anti-poussière (6), et des blocs de connexion (67) s'étendant vers l'extérieur sont prévus aux deux extrémités du premier corps de couvercle et du second corps de couvercle, respectivement, et les blocs de connexion (67) présentent des trous de connexion ; et le premier corps de couvercle et le second corps de couvercle sont connectés par un connecteur.

6. Manchon selon la revendication 5, **caractérisé en ce que** les balais électriques (61) comprennent deux paires de balais électriques (61), les plaquettes (62) comprennent deux paires de plaquettes, une paire de balais électriques (61) est disposée sur le premier couvercle et une autre paire de balais électriques (61) est disposée sur le second couvercle et les deux paires de balais électriques (61) sont adjacentes et décalées.

7. Mécanisme de verrouillage (3) pour ensemble de roues à écartement variable, comprenant un électroaimant de traction (32) et une broche de verrouillage (33), et le manchon pour ensemble de roues à écartement variable selon l'une quelconque des revendications 1 à 6, dans lequel l'électroaimant de traction (32) est fixé au niveau d'une paroi latérale intérieure du second couvercle d'extrémité (3121), l'électroaimant de traction (32) inclut une bobine de traction (32-1) et un noyau mobile (32-2) étant commandé pour se déplacer en activant et désactivant la bobine de traction (32-1), et la broche de verrouillage (33) est connectée de manière fixe à une extrémité du noyau mobile (32-2) à l'écart de la bobine de traction (32-1) et le noyau mobile (32-2) est configuré pour entraîner les broches de verrouillage (33) à pénétrer à travers le trou traversant et à s'insérer dans ou à se retirer du trou de verrouillage (41) pour verrouiller ou déverrouiller les roues (4).

8. Mécanisme de verrouillage (3) selon la revendication 7, **caractérisé en ce que** l'électroaimant de traction (32) comprend en outre un logement fixé sur la paroi latérale intérieure du second couvercle d'extrémité (3121) ; et l'électroaimant de traction (32) comprend en outre des bobines de mandrin (34) disposées sur des côtés opposés du noyau mobile (32-2), respectivement, et une broche de verrouillage (35) s'adaptant à chacune des bobines de mandrin (34), deux rainures de verrouillage annulaires étant disposées sur le noyau mobile (32-2) à intervalles dans une direction axiale du noyau mobile (32-2) et la broche de verrouillage (35) étant configurée pour s'insérer dans l'une des rainures de verrouillage annulaires afin de fixer le noyau mobile (32-2) dans une position déverrouillée ou une position verrouillée.

**FIG. 1**

**FIG. 2**

**FIG. 3**

**FIG. 4**

**FIG. 5**

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019105411671

- CN 108909355 A